# EUROPÄISCHE PATENTSCHRIFT

(11) **EP 3 809 116 B1**
(45) Veröffentlichungstag und Bekanntmachung des Hinweises auf die Patenterteilung: **03.05.2023**
(21) Anmeldenummer: 19203078.1
(22) Anmeldetag: 14.10.2019
(51) Int. Cl.: G01N 17/00

(54) **PRÜFKAMMER UND VERFAHREN ZUR KONDITIONIERUNG VON LUFT**
TEST CHAMBER AND METHOD FOR CONDITIONING OF AIR
CHAMBRE D'ESSAI ET PROCÉDÉ DE CONDITIONNEMENT DE L'AIR

(43) Veröffentlichungstag der Anmeldung: 21.04.2021
(73) Patentinhaber: Weiss Technik GmbH, 35447 Reiskirchen (DE)
(72) Erfinder: SALAMON, Bojan, 72458 Albstadt (DE); BITZER, Jürgen, 72336 Balingen (DE); NUFER, Jürgen, 72469 Meßstetten (DE)
(74) Vertreter: advotec.

(56) Entgegenhaltungen:
- EP-A1- 2 759 826
- JP-A- 2012 211 825
- JP-B2- 5 329 325

## Beschreibung

Die Erfindung betrifft eine Prüfkammer, insbesondere Klimakammer oder dergleichen, sowie ein Verfahren zur Konditionierung von Luft eines Prüfraums einer Prüfkammer.

Prüfkammern werden regelmäßig zur Überprüfung von physikalischen und/oder chemischen Eigenschaften von Gegenständen, insbesondere Vorrichtungen, eingesetzt. So sind Temperaturprüfschränke oder Klimaprüfschränke bekannt, innerhalb derer Temperaturen in einem Bereich von -50°C bis +180°C eingestellt werden können. Bei Klimaprüfschränken können ergänzend gewünschte Klimabedingungen eingestellt werden, denen dann die Vorrichtung bzw. das Prüfgut über einen definierten Zeitraum ausgesetzt wird. Derartige Prüfkammern können als ein mobiles Gerät ausgebildet sein, welches lediglich mit erforderlichen Versorgungsleitungen mit einem Gebäude verbunden ist und alle zur Temperierung und Klimatisierung erforderlichen Baugruppen umfasst. Eine Temperierung eines das zu prüfende Prüfgut aufnehmenden Prüfraums erfolgt regelmäßig in einem Umluftkanal innerhalb des Prüfraums. In dem Umluftkanal sind ein oder mehrere Wärmetauscher zur Erwärmung oder Kühlung der den Umluftkanal bzw. den Prüfraum durchströmenden Luft angeordnet. Dabei saugt ein Lüfter bzw. ein Ventilator die im Prüfraum befindliche Luft an und leitet sie im Umluftkanal zu den jeweiligen Wärmetauschern. Das Prüfgut kann so temperiert oder auch einem definierten Temperaturwechsel ausgesetzt werden. Während eines Prüfintervalls kann dann beispielsweise eine Temperatur zwischen einem Temperaturmaximum und einem Temperaturminimum der Prüfkammer wechseln. Eine derartige Prüfkammer ist beispielsweise aus der DE 10 2016 204 378 A1 bekannt. Weiter ist regelmäßig vorgesehen, eine relative Luftfeuchte innerhalb des Prüfraums während eines Prüfintervalls einzustellen bzw. die im Prüfraum befindliche Luft hinsichtlich ihrer relativen Feuchte zu konditionieren. Neben einer Entfeuchtung des Prüfraums über beispielsweise einen Kondensator wird daher ein im Klimaprüfschrank verbauter Befeuchter eingesetzt. Während eines Prüfablaufs bzw. Prüfzyklus kann eine Erhöhung oder Minderung einer Lufttemperatur im Prüfraum und/oder eine Erhöhung oder Minderung einer relativen Luftfeuchte der Luft im Prüfraum vorgesehen sein. Je nach Prüfablauf kann aber auch die Temperatur oder relative Luftfeuchte auf einem konstanten Wert zu halten sein. Für verschiedene Prüfabläufe sind eine Reihe von Prüfnormen für Klimaschränke bekannt, beispielsweise für Wechselklimate die IEC 60068-2-30 und die IEC 60068-2-38 in der zum Prioritätstag der Patentanmeldung gültigen Fassung. Diese Normen legen fest, innerhalb welcher Zeiträume bestimmte Temperaturen und relative Luftfeuchten in dem Prüfraum auszubilden sind. Insbesondere besteht hier Problem der möglichst genauen Regelung der relativen Luftfeuchte der Luft in dem Prüfraum.

JP 2012 211825 A offenbart ein auf absoluter Feuchtigkeit basierendes Temperatur- und Feuchtigkeitsregulierungssystem sowie ein Prüfgerät mit einem derartigen System.

JP 5 329325 B2 offenbart eine Umweltprüfvorrichtung, bei der ein Prüfgegenstand in einer Prüfkammer 2 angeordnet wird, und eine Oberflächentemperatur des Prüfgegenstandes in der Prüfkammer auf etwa 0°C oder weniger gesenkt wird, und dann eine absolute Luftfeuchtigkeit zumindest in der Umgebung des Prüfgegenstandes erhöht wird, und Dampf in der Luft auf der Oberfläche des Prüfgegenstandes und/oder seiner Umgebung in der Phase verändert wird, um dadurch Frost auf der Oberfläche des Prüfgegenstandes zu bilden.

Zur Regelung der Klimabedingungen im Prüfraum weisen die bekannten Prüfkammern eine Regeleinrichtung mit einem Prüfkammerregelkreis zur Regelung der Temperatur der Luft in dem Prüfraum und einem Befeuchterregelkreis zur Regelung der relativen Luftfeuchte im Prüfraum auf. Eine Messung von Ist-Größen erfolgt dabei mittels eines Temperatursensors bzw. Feuchtesensors innerhalb des Prüfraums. Insbesondere besteht hier die Schwierigkeit, dass unter bestimmten Voraussetzungen der Prüfkammerregelkreis und der Befeuchterregelkreis gegeneinander arbeiten. Soll beispielsweise eine Temperatur im Prüfraum reduziert werden und gleichzeitig eine relative Luftfeuchte erhöht werden, schwingen sich eine Regelung der relativen Luftfeuchte und eine Regelung der Temperatur eventuell gegeneinander auf. Beispielsweise würde es bei Startgrößen von 80°C und 50%r.F und Zielgrößen von 10°C und 90%r.F zu einem Befeuchten kommen, wobei jedoch bei der Zieltemperatur ein Entfeuchten erforderlich wäre. Daher muss zunächst abgewartet werden, bis die Temperatur erreicht bzw. eingeschwungen ist, bevor die relative Luftfeuchte eingestellt werden kann. Auch kann die Regeleinrichtung bzw. eine Software der Regeleinrichtung so programmiert werden, dass es unter bestimmten Betriebsbedingungen zu einer Verstärkung oder einer Abschwächung der einen oder anderen Regelgröße kommt, was jedoch sehr aufwändig ist. Eine entsprechende Software wird hierdurch wesentlich komplexer und damit auch fehleranfälliger. Auch dadurch, dass eine Sättigungsmenge von Wasserdampf in der Luft mit steigender Temperatur exponentiell ansteigt ergibt sich je nach verwendetem Regler für den Befeuchterregelkreis eine zu geringe oder eine zu große Verstärkung des Reglers in die eine oder andere Richtung, was ein Überschwingen und eine Ausregelzeit und damit eine Regelabweichung in unerwünschter Weise beeinflusst.

Der vorliegenden Erfindung liegt daher die Aufgabe zugrunde, ein Verfahren zur Konditionierung von Luft eines Prüfraums einer Prüfkammer und eine Prüfkammer vorzuschlagen, welches bzw. welche bei sich ändernden Prüfbedingungen eine geringe Regelabweichung einer relativen Luftfeuchte in einem Prüfraum ermöglicht.

Diese Aufgabe wird durch ein Verfahren mit den Merkmalen des Anspruchs 1 und einer Prüfkammer mit den Merkmalen des Anspruchs 8 gelöst.

Bei dem erfindungsgemäßen Verfahren zur Konditionierung von Luft eines Prüfraums einer Prüfkammer, insbesondere Klimakammer oder dergleichen, wird in dem gegenüber einer Umgebung verschließbaren und temperaturisolierten Prüfraum Prüfgut angeordnet, wobei mittels einer Temperiervorrichtung der Prüfkammer die Luft in dem Prüfraum temperiert und mittels eines Befeuchters der Prüfkammer befeuchtet wird, wobei eine Temperatur der Luft in dem Prüfraum mit einem Temperatursensor eines Prüfkammerregelkreises einer Regeleinrichtung der Prüfkammer gemessen wird, wobei mit dem Prüfkammerregelkreis die Temperatur mittels der Temperiervorrichtung geregelt wird, wobei eine Feuchte der Luft in dem Prüfraum mit einem Feuchtesensor eines Befeuchterregelkreises der Regeleinrichtung gemessen wird, wobei mit dem Befeuchterregelkreis die Feuchte mittels des Befeuchters geregelt wird, wobei mit dem Feuchtesensor eine absolute Luftfeuchtigkeit in dem Prüfraum gemessen wird, wobei mit dem Befeuchterregelkreis die Feuchte nach der absoluten Luftfeuchte als Regelgröße geregelt wird, und die Regeleinrichtung als eine Kaskadenregelung mit dem Prüfkammerregelkreis als ein Führungsregler und dem Befeuchterregelkreis als ein Folgeregler ausgebildet ist.

Der Befeuchter ist hier derart ausgebildet, dass mit dem Befeuchter die Befeuchtung der Luft in dem Prüfraum möglich ist. Weiter kann der Befeuchter auch für eine Entfeuchtung der Luft in dem Prüfraum genutzt werden. Der Befeuchter kann dann über weitere Einrichtungen zur Entfeuchtung der Luft verfügen, wie beispielsweise einem Kondensator. Der Temperatursensor des Prüfkammerregelkreises ist im Prüfraum angeordnet, so dass die Temperatur der im Prüfraum befindlichen Luft mit dem Temperatursensor gemessen werden kann. Ebenso ist der Feuchtesensor des Befeuchterregelkreises innerhalb des Prüfraums angeordnet, so dass die Feuchte der Luft in dem Prüfraum gemessen werden kann. Mit dem Feuchtesensor ist zumindest die absolute Luftfeuchte in g/m³ oder g/kg der Luft in dem Prüfraum bestimmbar. Weiter kann mit dem Feuchtesensor auch die relative Luftfeuchte und/oder ein Taupunkt in dem Prüfraum gemessen werden. Die absolute Luftfeuchte kann je nach verwendetem Temperatursensor auf vielfältige Art und Weise bestimmt werden, beispielsweise durch Messung der Temperatur und der Sättigungsmenge über Wasser oder über Eis der Luft in dem Prüfraum. Weiter kann die absolute Luftfeuchte aus einer Trockentemperatur und einer Feuchtetemperatur oder einem Dampfdruck, einer individuellen Gaskonstante des Wassers und einer absoluten Temperatur leicht bestimmt bzw. berechnet werden. Mit dem Feuchtesensor wird daher die absolute Luftfeuchte im Wesentlichen indirekt gemessen und basiert stets auf einem bekannten Verhältnis von Wassergehalt, Temperatur und Druck der Luft. Die mit dem Feuchtesensor gemessene bzw. bestimmte absolute Luftfeuchte wird von dem Befeuchterregelkreis als Regelgröße genutzt.

Die Verwendung der absoluten Luftfeuchte als Regelgröße bewirkt, dass der Prüfkammerregelkreis und der Befeuchterregelkreis nicht gegeneinander arbeiten können. Selbst bei einer Temperaturänderung der Luft im Prüfraum bleibt die absolute Luftfeuchte im Gegensatz zur relativen Luftfeuchte prinzipiell konstant. Bereits hierdurch wird eine Regelgenauigkeit wesentlich verbessert, da unerwünschte Verstärkungen bzw. Abschwächungen ausgeschlossen werden können. Ein weiterer vorteilhafter Effekt ergibt sich dadurch, dass die absolute Feuchte im Prüfraum an allen Stellen stets gleich ist. Da an verschiedenen Stellen im Prüfraum Temperaturabweichungen vorliegen können, kann eine relative Luftfeuchte an diesen Stellen unterschiedlich groß sein. Es war daher bisher erforderlich, eine räumliche Messung der relativen Luftfeuchte an verschiedenen Messstellen im Prüfraum vorzunehmen, um die relative Luftfeuchte überhaupt genau bestimmen zu können. Durch die Verwendung der absoluten Luftfeuchte als Regelgröße kann auf diese räumliche Messung verzichtet werden, da lediglich eine Kenntnis der Temperatur an einer Messstelle erforderlich ist, wenn an dieser Messstelle die absolute Luftfeuchte gemessen bzw. bestimmt wurde. Eine Kalibrierung bzw. Einstellung der Prüfkammer vor einer Durchführung eines Prüfablaufs wird dadurch wesentlich erleichtert.

Weiter kann vorgesehen sein, die Feuchte ausschließlich nach der absoluten Luftfeuchte als Regelgröße zu regeln. Grundsätzlich wäre es auch möglich unter bestimmten Betriebsbedingungen der Prüfkammer alternativ nach der relativen Luftfeuchte und/oder einem Taupunkt als Regelgröße zu regeln. Dies wäre jedoch nachteilig, da dann eine Umschaltung der Regelgrößen während eines Prüfablaufs erfolgen müsste. Eine Software der Regeleinrichtung würde dadurch noch komplexer.

In der Regeleinrichtung kann ein vorgegebener Prüfablauf mit einer Temperatur und einer Feuchte als Sollgrößen gespeichert werden, wobei die Feuchte als eine relative Luftfeuchte gespeichert werden kann, wobei die Regeleinrichtung für die relative Luftfeuchte die korrespondierende absolute Luftfeuchte bestimmen kann. Demnach kann vorgesehen sein, vorgegebene Prüfabläufe in der Regeleinrichtung zu speichern, so dass die Regeleinrichtung über einen Zeitintervall bzw. einen Prüfzeitabschnitt die Temperatur und Feuchte für beispielsweise einen genormten Prüfablauf regeln kann. Die Zielgrößen bzw. Sollgrößen der Temperatur und Feuchte können daher für den gesamten Prüfablauf gespeichert werden. Dabei kann bei der Feuchte von der relativen Luftfeuchte als Sollgröße ausgegangen werden, da diese regelmäßig für genormte Prüfabläufe angegeben ist. Die Regeleinrichtung kann nun für diese relative Luftfeuchte die korrespondierende, absolute Luftfeuchte rechnerisch bestimmen. So ist es auch möglich, dass die absolute Luftfeuchte von dem Befeuchterregelkreis als Sollgröße bzw. Regelgröße verwendet wird.

Die Regeleinrichtung kann daher die vorgegebene absolute Luftfeuchte als die Sollgröße und die gemessene absolute Luftfeuchte als eine Ist-Größe in dem Befeuchterregelkreis verwenden. So kann der Befeuchterregelkreis allein die absolute Luftfeuchte als Regelgröße verwenden.

Die Temperatur der Luft in dem Prüfraum kann in einem Prüfzeitabschnitt eines vorgegebenen Prüfablaufs von der Regeleinrichtung geändert bzw. erhöht oder vermindert werden, wobei die Temperatur mit dem Prüfkammerregelkreis geregelt werden kann, und zeitgleich die Feuchte der Luft in dem Prüfraum mit dem Befeuchterregelkreis geregelt werden kann. Dadurch dass der Prüfkammerregelkreis und der Befeuchterregelkreis gleichzeitig betrieben werden können, wird es möglich, gleichzeitig die Temperatur und Feuchte zu regeln. Da der Befeuchterregelkreis die absolute Luftfeuchte als Regelgröße verwendet, kann in diesem Fall ausgeschlossen werden, dass der Prüfkammerregelkreis und der Befeuchterregelkreis sich gegenseitig behindern.

Als ein Regler des Befeuchterregelkreises kann ein PID-Regler verwendet werden. Dies ist besonders vorteilhaft, da die absolute Luftfeuchte mit dem konstanten P-Anteil des PID-Reglers besser zu regeln ist als eine relative Luftfeuchte als Regelgröße. Dadurch dass mit steigender Temperatur ein möglicher Wassergehalt der Luft exponentiell ansteigt, ist mit der absoluten Luftfeuchte als Regelgröße diese exponentielle Funktion bereits in den Werten der absoluten Luftfeuchte enthalten, was bei der relativen Luftfeuchte als Regelgröße nicht der Fall ist. So wird es erst durch die Verwendung der absoluten Luftfeuchte als Regelgröße möglich, einen PID-Regler vorteilhaft einzusetzen und eine höhere Regelqualität zu erzielen.

Mittels des Befeuchterregelkreises kann eine Feuchtekonstanz in dem Prüfraum mit einer Toleranz von < ±1 % absolute Luftfeuchte geregelt werden.

Die erfindungsgemäße Prüfkammer, insbesondere Klimakammer oder dergleichen, zur Konditionierung von Luft, umfasst einen gegenüber einer Umgebung verschließbaren und temperaturisolierten Prüfraum zur Aufnahme von Prüfgut, eine Temperiervorrichtung zur Temperierung und einen Befeuchter zur Befeuchtung der Luft in dem Prüfraum, wobei die Prüfkammer eine Regeleinrichtung mit einem Prüfkammerregelkreis und einem Befeuchterregelkreis aufweist, wobei der Prüfkammerregelkreis einen Temperatursensor zur Messung einer Temperatur der Luft in dem Prüfraum aufweist und zur Regelung der Temperatur mittels der Temperiervorrichtung dient, wobei der Befeuchterregelkreis einen Feuchtesensor zur Messung einer Feuchte der Luft in dem Prüfraum aufweist und zur Regelung der Feuchte mittels des Befeuchters dient, wobei mit dem Feuchtesensor eine absolute Luftfeuchte in dem Prüfraum messbar ist, wobei mit dem Befeuchterregelkreis die Feuchte nach der absoluten Luftfeuchte als Regelgröße regelbar ist. Zu den Vorteilen der erfindungsgemäßen Prüfkammer wird auf die Vorteilsbeschreibung des erfindungsgemäßen Verfahrens verwiesen.

Der Feuchtesensor kann ein Psychrometer zur Messung einer Trockentemperatur und einer Feuchtetemperatur sein. Das Psychrometer kann beispielsweise ein Aspirationspsychrometer sein, welches ein Thermometer bzw. Trockenthermometer und eine Feuchtethermometer umfasst, dessen Sensorelement bzw. dessen zur Temperaturmessung maßgeblicher Abschnitt mit einer mit Wasser benetzbaren Hülle umgeben ist. In Abhängigkeit einer Feuchte der Luft in dem Prüfraum verdunstet die Flüssigkeit der Hülle schneller oder langsamer, wobei durch die Verdunstung das Sensorelement gekühlt wird und sich eine Temperaturdifferenz zwischen dem Feuchtethermometer und dem nicht mit der Hülle umgebenen Trockenthermometer ergibt. Aus der Temperaturdifferenz kann mit Hilfe von Tafeln oder Algorithmen eine relative Luftfeuchte, ein Taupunkt und/oder die absolute Luftfeuchte bestimmt bzw. gemessen werden. Prinzipiell kann der Feuchtesensor jedoch auch jede andere Art von Sensor sein, der zur Messung der absoluten Luftfeuchte geeignet ist.

Der Befeuchter kann einem Behälter mit einem Behälterinnenraum zur Aufnahme eines Wasserbades, einer Heizvorrichtung zur Temperierung des Wasserbades, und eine Belüftungsvorrichtung zur Erzeugung von Luftblasen in dem Wasserbad, aufweisen, wobei oberhalb des Wasserbades in dem Behälter eine Behälteröffnung ausgebildet sein kann, die den Behälterinnenraum mit dem Prüfraum verbindet. Der Behälter des Befeuchters kann im Wesentlichen geschlossen und temperaturisoliert ausgebildet sein. Die Heizvorrichtung kann in dem Wasserbad angeordnet sein, so dass das Wasserbad mittels der Heizvorrichtung erwärmt werden kann. Die Behälteröffnung dient dann zur dichten Verbindung mit dem Prüfraum, so dass befeuchtete Luft aus dem Behälter über beispielsweise einen Luftkanal oder Schlauch in den Prüfraum eingeleitet werden kann. Optional kann der Befeuchter auch so ausgebildet sein, dass er unmittelbar innerhalb des Prüfraums angeordnet ist. Mit der Belüftungsvorrichtung können die Luftblasen im Wasserbad erzeugt werden, wodurch die Luftblasen im Bereich der Heizvorrichtung aufsteigen können, so dass vergleichsweise schnell mit Wasser gesättigte Luft für den Prüfraum erzeugt werden kann.

Mittels der Temperiervorrichtung kann eine Temperatur in einem Temperaturbereich von -70°C bis +180°C, vorzugsweise -80°C bis +200°C, innerhalb des Prüfraums ausbildbar sein.

Die Temperiervorrichtung kann eine Kühleinrichtung mit einem Kühlkreislauf mit einem Kältemittel, einem Wärmeübertrager, der in dem Prüfraum angeordnet sein kann, einem Verdichter, einem Kondensator und einem Expansionsorgan aufweisen, wobei die Temperiervorrichtung eine Heizeinrichtung mit einer Heizung und einem weiteren Wärmeübertrager aufweisen kann. Die Heizeinrichtung kann beispielsweise eine elektrische Widerstandsheizung sein, die den Prüfraum beheizt, derart, dass über den weiteren Wärmeübertrager eine Temperaturerhöhung in dem Prüfraum möglich wird. Die Kühleinrichtung weist dann den Wärmeübertrager zur Kühlung der im Prüfraum befindlichen Luft auf. Die Regeleinrichtung kann die Kühleinrichtung und die Heizeinrichtung bzw. die Temperiervorrichtung so steuern, dass eine Kühlung oder Erwärmung der im Prüfraum umgewälzten Luft möglich ist und eine Lufttemperatur innerhalb des Prüfraums in einem für einen Prüfablauf vorgesehenen Temperaturbereich ausgebildet werden kann. Dabei kann unabhängig vom Prüfgut bzw. eines Betriebszustandes des Prüfguts eine zeitliche Temperaturkonstanz von ±1k, vorzugsweise ±0,3k bis ±0,5k, während eines Prüfintervalls bzw. Prüfablaufs in dem Prüfraum ausgebildet werden. Unter einem Prüfintervall wird hier ein Teilabschnitt eines vollständigen Prüfzeitraums verstanden, in dem das Prüfgut einer im Wesentlichen gleichbleibenden Temperatur oder Klimabedingung ausgesetzt wird.

Die Regeleinrichtung ist als eine Kaskadenregelung mit dem Prüfkammerregelkreis als ein Führungsregler und dem Befeuchterregelkreis als ein Folgeregler ausgebildet. Die Feuchte kann dann in Abhängigkeit der Temperatur geregelt werden, so dass stets sichergestellt ist, dass die Feuchte an die in der Prüfkammer vorherrschende Temperatur angepasst wird.

Weitere vorteilhafte Ausführungsformen einer Prüfkammer ergeben sich aus den Merkmalsbeschreibungen der auf den Verfahrensanspruch 1 zurückbezogenen Unteransprüche.

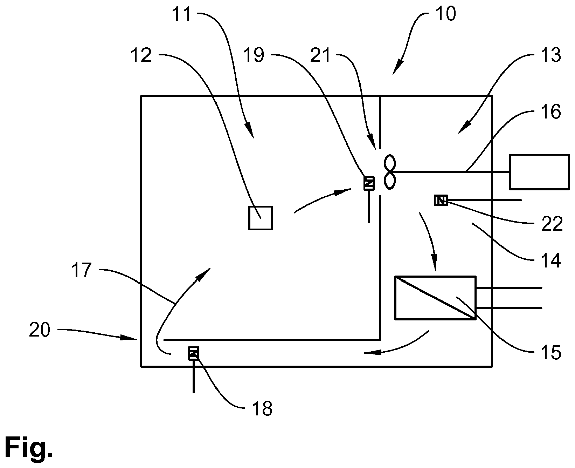

Nachfolgend wird eine bevorzugte Ausführungsform unter Bezugnahme auf die beigefügte Zeichnung näher erläutert.

Die **Figur** zeigt eine schematische Darstellung einer Prüfkammer 10, die einen Prüfraum 11 aufweist, in dem Prüfgut 12 angeordnet ist. In dem Prüfraum 11 ist weiterhin ein Umluftkanal 13 angeordnet, der einen Luftbehandlungsraum 14 im Prüfraum 11 ausbildet. In dem Luftbehandlungskanal 14 ist ein Wärmeübertrager 15 zur Erwärmung oder Kühlung der den Umluftkanal 13 durchströmenden Luft angeordnet. Dabei saugt ein Lüfter 16 die im Prüfraum 11 befindliche Luft an und leitet sie im Umluftkanal 13 zu dem Wärmeübertrager 15. Das Prüfgut 12 wird so von einem hier mit Pfeilen 17 dargestellten Luftstrom umströmt und einem definierten Temperaturwechsel ausgesetzt. Die Prüfkammer 10 verfügt über eine hier nicht dargestellte Regeleinrichtung mit einem Prüfkammerregelkreis und einem Befeuchterregelkreis. Der Prüfkammerregelkreis umfasst einen Temperatursensor 18, mittels dem eine Lufttemperatur einer Zuluft an einem Auslass 20 des Umluftkanals 13 messbar ist. Ein weiterer Temperatursensor 19 des Prüfkammerregelkreises ist an einem Einlass 21 des Umluftkanals 13 angeordnet, so dass hier eine Lufttemperatur einer Abluft innerhalb des Prüfraums 11 gemessen werden kann.

Die Regeleinrichtung kann eine Temperaturdifferenz der Temperatur der Zuluft und der Temperatur der Abluft innerhalb eines Prüfzeitabschnitts bzw. eines vorgegebenen Prüfablaufs erfassen, speichern und/oder verarbeiten. Die genaue Anpassung der Temperatur der Luft an eine Sollgröße erfolgt mit dem Prüfkammerregelkreis. Weiter ist in dem Umluftkanal ein Feuchtesensor 22 des Befeuchterregelkreises angeordnet mit dem eine absolute Luftfeuchte in g/m³ oder g/kg in dem Prüfraum 11 gemessen wird. Der Befeuchterregelkreis regelt die Feuchte der Luft in dem Prüfraum 11, vorzugsweise ausschließlich, nach der absoluten Luftfeuchte als Regelgröße. Auch die Feuchte wird entsprechend des vorgegebenen Prüfablaufs von in der Regeleinrichtung gespeicherten Sollgrößen eingestellt.

## Patentansprüche

1. Verfahren zur Konditionierung von Luft eines Prüfraums (11) einer Prüfkammer (10), insbesondere Klimakammer oder dergleichen, wobei in dem gegenüber einer Umgebung verschließbaren und temperaturisolierten Prüfraum Prüfgut (12) angeordnet wird, wobei mittels einer Temperiervorrichtung der Prüfkammer die Luft in dem Prüfraum temperiert und mittels eines Befeuchters der Prüfkammer befeuchtet wird, wobei eine Temperatur der Luft in dem Prüfraum mit einem Temperatursensor (18, 19) eines Prüfkammerregelkreises einer Regeleinrichtung der Prüfkammer gemessen wird, wobei mit dem Prüfkammerregelkreis die Temperatur mittels der Temperiervorrichtung geregelt wird, wobei eine Feuchte der Luft in dem Prüfraum mit einem Feuchtesensor (22) eines Befeuchterregelkreises der Regeleinrichtung gemessen wird, wobei mit dem Befeuchterregelkreis die Feuchte mittels des Befeuchters geregelt wird,
**dadurch gekennzeichnet,**
**dass** mit dem Feuchtesensor eine absolute Luftfeuchte in dem Prüfraum gemessen wird, wobei mit dem Befeuchterregelkreis die Feuchte nach der absoluten Luftfeuchte als Regelgröße geregelt wird, und dass die Regeleinrichtung als eine Kaskadenregelung mit dem Prüfkammerregelkreis als ein Führungsregler und dem Befeuchterregelkreis als ein Folgeregler ausgebildet ist.

2. Verfahren nach Anspruch 1,
**dadurch gekennzeichnet,**
**dass** die Feuchte ausschließlich nach der absoluten Luftfeuchte als Regelgröße geregelt wird.

3. Verfahren nach Anspruch 1 oder 2,
**dadurch gekennzeichnet,**
**dass** in der Regeleinrichtung ein vorgegebener Prüfablauf mit einer Temperatur und einer Feuchte als Sollgrößen gespeichert wird, wobei die Feuchte als eine relative Luftfeuchte gespeichert wird, wobei die Regeleinrichtung für die relative Luftfeuchte die korrespondierende absolute Luftfeuchte bestimmt.

4. Verfahren nach Anspruch 3,
**dadurch gekennzeichnet,**
**dass** die Regeleinrichtung die vorgegebene absolute Luftfeuchte als die Sollgröße und die gemessene absolute Luftfeuchte als eine Ist-Größe in dem Befeuchterregelkreis verwendet.

5. Verfahren nach einem der vorangehenden Ansprüche,
**dadurch gekennzeichnet,**
**dass** die Temperatur in einem Prüfzeitabschnitt eines vorgegebenen Prüfablaufs von der Regeleinrichtung geändert wird, wobei die Temperatur mit dem Prüfkammerregelkreis geregelt wird, und zeitgleich die Feuchte mit dem Befeuchterregelkreis geregelt wird.

6. Verfahren nach einem der vorangehenden Ansprüche,
**dadurch gekennzeichnet,**
**dass** als ein Regler des Befeuchterregelkreises ein PID-Regler verwendet wird.

7. Verfahren nach einem der vorangehenden Ansprüche,
**dadurch gekennzeichnet,**
**dass** mittels des Befeuchterregelkreises eine Feuchtekonstanz in dem Prüfraum mit einer Toleranz von < ±1 % absolute Luftfeuchte geregelt wird.

8. Prüfkammer (10), insbesondere Klimakammer oder dergleichen, zur Konditionierung von Luft, umfassend einen gegenüber einer Umgebung verschließbaren und temperaturisolierten Prüfraum (11) zur Aufnahme von Prüfgut (12), eine Temperiervorrichtung zur Temperierung und einen Befeuchter zur Befeuchtung der Luft in dem Prüfraum, wobei die Prüfkammer eine Regeleinrichtung mit einem Prüfkammerregelkreis und einem Befeuchterregelkreis aufweist, wobei der Prüfkammerregelkreis einen Temperatursensor (18, 19) zur Messung einer Temperatur der Luft in dem Prüfraum aufweist und zur Regelung der Temperatur mittels der Temperiervorrichtung dient, wobei der Befeuchterregelkreis einen Feuchtesensor (22) zur Messung einer Feuchte der Luft in dem Prüfraum aufweist und zur Regelung der Feuchte mittels des Befeuchters dient,
**dadurch gekennzeichnet,**
**dass** mit dem Feuchtesensor eine absolute Luftfeuchte in dem Prüfraum messbar ist, wobei mit dem Befeuchterregelkreis die Feuchte nach der absoluten Luftfeuchte als Regelgröße regelbar ist, und dass die Regeleinrichtung als eine Kaskadenregelung mit dem Prüfkammerregelkreis als ein Führungsregler und dem Befeuchterregelkreis als ein Folgeregler ausgebildet ist.

9. Prüfkammer nach Anspruch 8,
**dadurch gekennzeichnet,**
**dass** der Feuchtesensor (22) ein Psychrometer zur Messung einer Trockentemperatur und einer Feuchtetemperatur ist.

10. Prüfkammer nach Anspruch 8 oder 9,
**dadurch gekennzeichnet,**
**dass** der Befeuchter einen Behälter mit einem Behälterinnenraum zur Aufnahme eines Wasserbades, eine Heizvorrichtung zur Temperierung des Wasserbades, und eine Belüftungsvorrichtung zur Erzeugung von Luftblasen in dem Wasserbad, aufweist, wobei oberhalb des Wasserbades in dem Behälter eine Behälteröffnung ausgebildet ist, die den Behälterinnenraum mit dem Prüfraum (11) verbindet.

11. Prüfkammer nach einem der Ansprüche 8 bis 10,
**dadurch gekennzeichnet,**
**dass** mittels der Temperiervorrichtung eine Temperatur in einem Temperaturbereich von -70 °C bis +180 °C, vorzugsweise -80 °C bis +200 °C, innerhalb des Prüfraums (11) ausbildbar ist.

12. Prüfkammer nach Anspruch 11,
**dadurch gekennzeichnet,**
**dass** die Temperiervorrichtung eine Kühleinrichtung mit einem Kühlkreislauf mit einem Kältemittel, einem Wärmeübertrager (15), der in dem Prüfraum (11) angeordnet ist, einem Verdichter, einem Kondensator und einem Expansionsorgan aufweist, wobei die Temperiervorrichtung eine Heizeinrichtung mit einer Heizung und einem weiteren Wärmeübertrager aufweist.

## Claims

1. A method for conditioning air of a test space (11) of a test chamber (10), in particular a climate chamber or the like, test material (12) being disposed in the temperature-insulated test space which is sealable against an environment, a temperature of the air in the test space being controlled by means of a temperature control device of the test chamber and the air being humidified by means of a humidifier of the test chamber, the temperature of the air in the test space being measured using a temperature sensor (18, 19) of a test-chamber control circuit of a control device of the test chamber, the temperature being controlled by the test-chamber control circuit by means of the temperature control device, a humidity of the air in the test space being measured using a humidity sensor (22) of a humidifier control circuit of the control device, the humidity being controlled by the humidifier control circuit by means of the humidifier,
**characterized in that**
an absolute air humidity in the test space is measured using the humidity sensor, the humidity being controlled by the humidifier control circuit with the absolute air humidity acting as the control size, and **in that** the control device is realized as a cascade control having the test-chamber control circuit as a master controller and having the humidifier control circuit as a follow-up controller.

2. The method according to claim 1,
**characterized in that**
the humidity is solely controlled with the absolute air humidity acting as the control size.

3. The method according to claim 1 or 2,
**characterized in that**
a prespecified test sequence having a temperature and a humidity as nominal sizes is stored in the control device, the humidity being stored as a relative air humidity, the control device determining the corresponding absolute air humidity for the relative air humidity.

4. The method according to claim 3,
**characterized in that**
the control device uses the prespecified absolute air humidity as the nominal size and the measured absolute air humidity as an actual size in the humidifier control circuit.

5. The method according to any one of the preceding claims,
**characterized in that**
the temperature is changed by the control device during a test time segment of a prespecified test sequence, the temperature being controlled by the test-chamber control circuit, while the humidity is simultaneously controlled by the humidifier control circuit.

6. The method according to any one of the preceding claims,
**characterized in that**
a PID controller is used as a controller of the humidifier control circuit.

7. The method according to any one of the preceding claims,
**characterized in that**
a humidity constant in the test space is controlled with a tolerance of < ±1 % absolute air humidity by means of the humidifier control circuit.

8. A test chamber (10), in particular a climate chamber or the like, for conditioning air, the test chamber (10) comprising a temperature-insulated test space (11) which is sealable against an environment and serves for receiving test material (12), a temperature control device for controlling a temperature of the air and a humidifier for humidifying the air in the test space, the test chamber comprising a control device having a test-chamber control circuit and a humidifier control circuit, the test-chamber control circuit comprising a temperature sensor (18, 19) for measuring a temperature of the air in the test space and serving for controlling the temperature by means of the temperature control device, the humidifier control circuit comprising a humidity sensor (22) for measuring a humidity of the air in the test space and serving for controlling the humidity by means of the humidifier,
**characterized in that**
an absolute air humidity in the test space is measurable using the humidity sensor, the humidity being controllable by the humidifier control circuit with the absolute air humidity acting as the control size, and **in that** the control device is realized as a cascade control having the test-chamber control circuit as a master controller and having the humidifier control circuit as a follow-up controller.

9. The test chamber according to claim 8,
**characterized in that**
the humidity sensor (22) is a psychrometer for measuring a dry-bulb temperature and a wet-bulb temperature.

10. The test chamber according to claim 8 or 9,
**characterized in that**
the humidifier comprises a container having a container interior for receiving a water bath, a heating device for controlling the temperature of the water bath and an air conditioning device for generating air bubbles in the water bath, a container opening, which connects the container interior to the test space (11), being formed in the container above the water bath.

11. The test chamber according to any one of the claims 8 to 10,
**characterized in that**
a temperature ranging from -70 °C to +180 °C, preferably -80 °C to +200 °C, is capable of being generated within the test space (11) by means of the temperature control device.

12. The test chamber according to claim 11,
**characterized in that**
the temperature control device comprises a cooling device having a cooling circuit having a refrigerant, a heat exchanger (15), which is disposed in the test space (11), a compactor, a condenser and an expansion means, the temperature control device comprising a heating device having a heater and another heat exchanger.

## Revendications

1. Procédé pour le conditionnement d'air d'un espace d'essai (11) d'une chambre d'essai (10), notamment d'une chambre climatique ou d'autres choses semblables, du matériau d'essai (12) étant disposé dans l'espace d'essai qui est isolé thermiquement et capable d'être étanché à un environnement, une température de l'air dans l'espace d'essai étant régulée au moyen d'un dispositif de régulation de température de la chambre d'essai et l'air étant humidifié au moyen d'un humidificateur de la chambre d'essai, la température de l'air dans l'espace d'essai étant mesurée au moyen d'un capteur de température (18, 19) d'une boucle de régulation de la chambre d'essai d'un moyen de régulation de la chambre d'essai, la température étant régulée par la boucle de régulation de la chambre d'essai au moyen du dispositif de régulation de température, une humidité de l'air dans l'espace d'essai étant mesurée au moyen d'un capteur d'humidité (22) d'une boucle de régulation de l'humidificateur du moyen de régulation, l'humidité étant régulée par la boucle de régulation de l'humidificateur au moyen de l'humidificateur,
**caractérisé en ce**
**qu'**une humidité absolue de l'air dans l'espace d'essai est mesurée au moyen du capteur d'humidité, l'humidité étant régulée par la boucle de régulation de l'humidificateur sur la base de l'humidité absolue de l'air comme variable commandée, et **en ce que** le moyen de régulation est réalisé comme régulation en cascade ayant la boucle de régulation de la chambre d'essai comme régulateur principal et la boucle de régulation de l'humidificateur comme régulateur de correspondance.

2. Procédé selon la revendication 1,
**caractérisé en ce que**
l'humidité est uniquement régulée sur la base de l'humidité absolue de l'air comme variable commandée.

3. Procédé selon la revendication 1 ou 2,
**caractérisé en ce**
**qu'**un déroulement d'essai prédéfini ayant une température et une humidité comme grandeurs de consigne est stocké dans le moyen de régulation, l'humidité étant stockée comme humidité relative de l'air, le moyen de régulation déterminant l'humidité absolue correspondante de l'air pour l'humidité relative de l'air.

4. Procédé selon la revendication 3,
**caractérisé en ce que**
le moyen de régulation utilise l'humidité absolue prédéfinie de l'air comme grandeur de consigne et l'humidité absolue mesurée de l'air comme grandeur réelle dans la boucle de régulation de l'humidificateur.

5. Procédé selon l'une quelconque des revendications précédentes,
**caractérisé en ce que**
la température est changée par le moyen de régulation dans une période d'essai d'un déroulement d'essai prédéfini, la température étant régulée par la boucle de régulation de la chambre d'essai et, simultanément, l'humidité étant régulée par la boucle de régulation de l'humidificateur.

6. Procédé selon l'une quelconque des revendications précédentes,
**caractérisé en ce**
**qu'**un régulateur PID est utilisé comme régulateur de la boucle de régulation de l'humidificateur.

7. Procédé selon l'une quelconque des revendications précédentes,
**caractérisé en ce**
**qu'**une constance d'humidité dans l'espace d'essai est régulée avec une tolérance de < ± 1 % de l'humidité absolue de l'air au moyen de la boucle de régulation de l'humidificateur.

8. Chambre d'essai (10), notamment une chambre climatique ou d'autres choses semblables, pour le conditionnement d'air, ladite chambre d'essai (10) comprenant un espace d'essai (11) qui est isolé thermiquement et capable d'être étanché à un environnement et sert à recevoir du matériau d'essai (12), un dispositif de régulation de température pour réguler une température de l'air et un humidificateur pour humidifier l'air dans l'espace d'essai, la chambre d'essai ayant une boucle de régulation de la chambre d'essai et une boucle de régulation de l'humidificateur, la boucle de régulation de la chambre d'essai ayant un capteur de température (18, 19) pour mesurer la température de l'air dans l'espace d'essai et servant à réguler la température au moyen du dispositif de régulation de température, la boucle de régulation de l'humidificateur ayant un capteur d'humidité (22) pour mesurer une humidité de l'air dans l'espace d'essai et servant à réguler l'humidité au moyen de l'humidificateur,
**caractérisée en ce**
**qu'**une humidité absolue de l'air dans l'espace d'essai est mesurable au moyen du capteur d'humidité, l'humidité étant régulable par la boucle de régulation de l'humidificateur sur la base de l'humidité absolue de l'air comme variable commandée, et **en ce que** le moyen de régulation est réalisé comme régulation en cascade ayant la boucle de régulation de la chambre d'essai comme régulateur principal et la boucle de régulation de l'humidificateur comme régulateur de correspondance.

9. Chambre d'essai selon la revendication 8,
**caractérisée en ce que**
le capteur d'humidité (22) est un psychromètre pour mesurer une température sèche et une température mouillée.

10. Chambre d'essai selon la revendication 8 ou 9,
**caractérisée en ce que**
l'humidificateur a un récipient ayant un intérieur de récipient pour recevoir un bain-marie, un dispositif chauffant pour réguler la température du bain-marie et un dispositif de ventilation pour générer des bulles d'air dans le bain-marie, une ouverture de récipient, qui relie l'intérieur de récipient à l'espace d'essai (11), étant formée dans le récipient au-dessus du bain-marie

11. Chambre d'essai selon l'une quelconque des revendications 8 à 10,
**caractérisée en ce**
**qu'**une température d'une plage de température de -70 °C à +180 °C, de préférence de -80 °C à +200 °C, est capable d'être établie à l'intérieur de l'espace d'essai (11) au moyen du dispositif de régulation de température.

12. Chambre d'essai selon la revendication 11,
**caractérisée en ce que**
le dispositif de régulation de température a un moyen de refroidissement ayant un circuit de refroidissement ayant un fluide frigorigène, un échangeur de chaleur (15) disposé dans l'espace d'essai (11), un compresseur, un condenseur et un élément de détente, le dispositif de régulation de température ayant un dispositif chauffant ayant un chauffage et un autre échangeur de chaleur.
